# EUROPÄISCHE PATENTANMELDUNG

(11) **EP 0 587 073 A2**
(43) Veröffentlichungstag der Anmeldung: **16.03.1994**
(21) Anmeldenummer: 93114190.7
(22) Anmeldetag: 03.09.1993
(51) Int. Cl.: F16D 3/50, F16D 3/72

(54) **Ganzstahl-Kupplung**

(30) Priorität: 09.09.1992 DE 4230130
(71) Anmelder: Bergische Stahl-Industrie, D-42859 Remscheid (DE)
(72) Erfinder: Piepenbreier, Ernst, D-4300 Essen 16 (DE); Zok, Reinhold, D-4100 Duisburg 46 (DE)
(74) Vertreter: Dahlkamp, Heinrich-Leo

(57) **Zusammenfassung**

Die Erfindung betrifft eine Ganzstahl-Kupplung, bestehend aus zwei unterschiedlichen Kupplungshälften (11,12), von denen jede Hälfte im Wellenbereich mit dem jeweiligen Wellenteil (11A,12A) verbunden ist. Die Kupplungshälften sind über eine formschlüssige Verbindung (13) trennbar miteinanderverbunden. Für die kraftschlüssige axiale Verbindung der beiden Kupplungshälften ist die eine Hälfte (11) über eine Schraube (15) mit einer von der eigentlichen Kupplungsfunktion unabhängigen Scheibe (21) mit zentralem Gewinde (17) verbunden.

## Beschreibung

Die Erfindung betrifft eine Ganzstahl-Kupplung mit in radialer Richtung sehr hohen Steifigkeit, wobei die Kupplung aus zwei unterschiedlichen Kupplungshälften besteht, von denen jede Hälfte im Wellenbereich kraft- und formschlüssig mit dem jeweiligen Wellenteil verbunden ist und die über eine nahe am Aussendurchmesser befindliche formschlüssige Verbindung,z.B. eine Spiralverzahnung,trennbar miteinander verbunden sind.

Es gibt Ganzstahl-Kupplungen, die je nach den geforderten Eigenschaften z.B.Als Membrankupplungen oder zum Beispiel als Laschenkupplungen oder ähnliche Bauarten bekannt sind. Sie unterscheiden sich im wesentlichen dadurch, dass ihre axiale Federkonstante und ihre Winkelsteifigkeit unterschiedlich ist. Allen bekannten Kupplungen gemeinsam ist eine sehr hohe radiale Steifigkeit. Dadurch ist diese Art von Kupplungen sehr gut geeignet, statisch unbestimmte Systeme (zum Beispiel dreifach gelagerte Wellen) in statisch bestimmte Konzepte umzuwandeln ohne erhöhten Fertigungsaufwand an das System zu stellen.

Diese bekannten Kupplungen müssen auch trennbar sein. Nach dem Stand der Technik wird die Trennbarkeit so erreicht, dass entweder eine einteilige nur durch Abpressen (Öl) einer Nabe erreicht wird, wobei ein erheblicher Ausbauweg (Nabenlänge) erforderlich ist oder aber die Kupplung in sich durch eine Stirnverzahnung formschlüssig geteilt ist. Die beiden Teile werden durch eine in der Mitte der Stirnverzahnung umlaufend angeordnete Anzahl von Schrauben verschraubt. Der Nachteil dieser Konstruktion ist die schwere Zugänglichkeit der Schrauben, da nur ein bestimmtes Segment als Zugangsmöglichkeit zur Verfügung steht. Dies gilt besonders für die Integration von Getriebe und Motor bei Antrieben für Schienenfahrzeuge, wobei ein Motorlager entfällt und die Motorwelle sich einerseits über ein Lager im Motorgehäuse und andererseits über eine radialsteife Kupplung auf der Ritzelwelle abstützt.

Der Erfindung liegt daher die Aufgabe zugrunde, die Nachteile der bekannten Kupplungen zu eliminieren und eine Kupplung zu schaffen, die die nachstehend beschriebenen Vorteile besitzt.

Die Lösung der Aufgabe besteht darin, dass für die kraftschlüssige axiale Verbindung der beiden Naben über eine Schraube die eine Nabe mit einer von der eigentlichen Kupplungsfunktion unabhängigen Scheibe mit zentralem Gewinde versehen ist.

Vorteilhaft ist eine federnde Scheibe vorgesehen, die mit einer zentralen Gewindebohrung versehen ist, deren Zentrale mit der Zentrale mit der Schraubendurchgangsbohrung fluchtet. Diese Scheibe wird aus bearbeitungstechnischen Gründen getrennt von der eigentlichen Funktionsnabe gefertigt und später mit dieser verzugsfrei verschweisst.

Zweckmässig besitzen beide Kupplungshälften unterhalb der Spiralverzahnung eine Ausdrehung, deren axiale Ausdehnung bei der Verbindung der beiden Kupplungshälften für den erforderlichen axialen Federweg genutzt wird.

Der Vorteil der erindungsgemässen Kupplung besteht darin, dass weder ein langer Ausbauweg erforderlich, noch die Zugänglichkeit der Verbindungsschrauben problematisch ist.

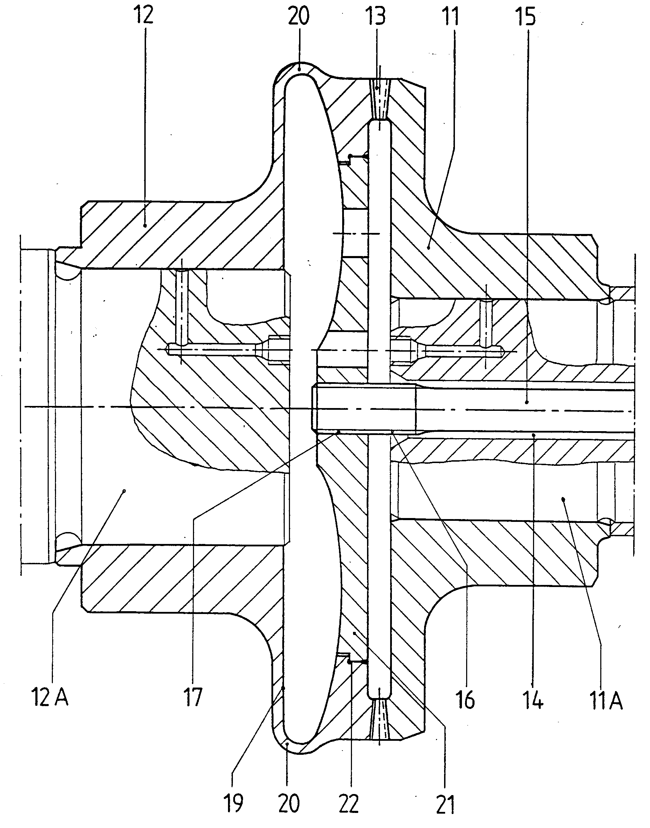

In der Zeichnung ist die erfindungs-gemässe Kupplung im Schnitt dargestellt, worin die beiden Kupplungshälften 11 und 12 kraft- und formschlüssig mit den Wellen 11A und 12A verbunden sind. Dabei führt die Welle 11A zum Getriebe und die Welle 12A zum Motor. Die beiden Kupplungshälften 11 und 12 sind nahe am Aussendurchmesser durch eine Spiralverzahnung oder eine ander zentrierende Verzahnung formschlüssig miteinander verbunden.

An dieser Stelle lassen sich die beiden Kupplungshälften voneinander trennen. Das Teil 12 gekennzeichneten Bereichen 19 und 2o so ausgebildet, dass die Funktionen axiale Beweglichkeit und die Funktion Winkelbeweglichkeit der Gesamtkupplung von diesen Bereichen gewährleistet wird. Die axiale Verbindung der beiden Hälften 11 und 12 erfolgt über eine Schraube 15, die vorzugsweise als Dehnschraube ausgeführt wird. Diese Schraube 15 wird durch die Bohrung 14 der Welle 11A in die zentrale Gewindebohrung 17 der vorzugsweise federnden Scheibe 21 mit einem vorgegebenen Anzugsmoment eingeschraubt.

Die Scheibe 21, die letztlich als Teil der Kupplungsnabe 12 zu verstehen ist,wird mit der Nabe 12 an der Zentrierung 22 verzugsfrei angeschweisst. Das vorgegebene Anzugmoment der Schraube 15 ist so gewählt, dass die aus dem Anzugsmoment herrührende Axialkraft, die die beiden Naben 11 und 12 über die Verzahnung zusammenzieht, in jedem Fall grösser ist als die grösste Axialkraftkomponente, die sich auf grund der Verzahnungs-geometrie und der statischen oder dynamischen Drehmomentbelastung der Kupplung ergeben kann.

## Patentansprüche

1. Ganzstahl-Kupplung mit in radialer Richtung sehr hohen Steifigkeit, wobei die Kupplung aus zwei unterschiedlichen Kupplungshälften besteht, von denen jede Hälfte im Wellenbereich kraft- und formschlüssig mit dem jeweiligen Wellenteil verbunden ist und die über eine nahe dem Aussendurchmesser formschlüssige Verbindung, beispielsweise einer Spiralverzahnung, trennbar miteinander verbunden sind, dadurch gekennzeichnet, dass für die kraftschlüssige axiale Verbindung der beiden Naben über eine Schraube die eine Nabe mit einer von der eigentlichen Kupplungsfunktion unabhängigen Scheibe (21) mit zentralem Gewinde (17) versehen ist.

2. Ganzstahl-Kupplung nach Anspruch 1, dadurch gekennzeichnet, dass die Scheibe (21) als federnde Scheibe ausgebildtet ist.

3. Ganzstahl-Kupplung nach Anspruch 1 oder 2, dadurch gekennzeichnet, dass die Scheibe (21) und die zugehörige Kupplungsnabe (12) aus zwei Teilen besteht und vorzugsweise miteinander verschweisst sind.

4. Ganzstahl-Kupplung nach einem der Ansprüche 1 bis 3, dadurch-gekennzeichnet, dass die Zentralschraube (15) als Dehnschraube ausgebildet ist.
